# EUROPÄISCHE PATENTSCHRIFT

(11) **EP 2 241 486 B1**
(45) Veröffentlichungstag und Bekanntmachung des Hinweises auf die Patenterteilung: **13.04.2011**
(21) Anmeldenummer: 10160158.1
(22) Anmeldetag: 16.04.2010
(51) Int. Cl.: B60T 7/12, B60T 17/18

(54) **Notbremssystem für elektrische Maschinen in Hybridfahrzeugen und/oder Elektrofahrzeugen**
Emergency brake system for electric engines in hybrid vehicles and/or electric cars
Système de freinage d'urgence pour machines électriques dans des véhicules hybrides et/ou des véhicules électriques

(30) Priorität: 16.04.2009 DE 102009002436
(43) Veröffentlichungstag der Anmeldung: 20.10.2010
(73) Patentinhaber: ZF Friedrichshafen AG, 88038 Friedrichshafen (DE)
(72) Erfinder: Wehlen, Timo, 88045 Friedrichshafen (DE)

(56) Entgegenhaltungen:
- DE-A1- 10 008 884
- DE-A1-102004 025 952
- DE-A1-102006 007 960
- DE-C1- 19 617 372
- FR-A1- 2 741 994
- JP-A- 2008 220 028

## Beschreibung

Die vorliegende Erfindung bezieht sich auf ein Notbremssystem für elektrische Maschinen in Hybridfahrzeugen und Elektrofahrzeugen gemäß dem Oberbegriff des Patentanspruchs 1.

Insbesondere bei Synchronmaschinen wird während der Drehung des Rotors in dem durch Permanentmagnete erzeugten Magnetfeld eine Spannung erzeugt, was während eines kritischen Fehlers im Hochvoltleitungssystem eines Hybrid-/Elektrofahrzeuges in nachteiliger Weise die Gesundheit und Sicherheit der beteiligten Personen gefährden kann. Eine derartige Situation kann beispielsweise entstehen, wenn bei einem Crash des Fahrzeugs die Hochvoltleitungen beschädigt werden. Aus diesem Grund ist das Vorsehen einer Notbremse für elektrische Maschinen in Hybridfahrzeugen und Elektrofahrzeugen erforderlich.

Aus der DE 19604712 A1 ist eine elektromechanische Bremse für eine elektrische Maschine, insbesondere für einen Winkelschleifer, zum Abbremsen der Schleifscheibe eines Winkelschleifers bekannt, mit einem innerhalb des Maschinengehäuses befestigten Spulengehäuse mit integriertem Spulenkörper, neben dem in axialer Richtung ein Federelement, eine Bremsscheibe aus ferromagnetischem Material sowie ein auf der Läuferachse befestigtes und mit einem Bremsbelag versehenes Lüfterrad eng benachbart angeordnet sind.

Bei der bekannten Bremse presst die Federkraft des Federelementes bei abgeschalteter elektrischer Maschine die Bremsscheibe gegen den Bremsbelag des Lüfterrades, wodurch die Schleifscheibe eines Winkelschleifers zum Stillstand kommt. Hierbei ist vorgesehen, dass der Spulenkörper bei eingeschalteter elektrischer Maschine von der Versorgungsspannung der elektrischen Maschine beaufschlagt ist, wobei das hierdurch aufgebaute Magnetfeld eine Anzugskraft auf die Bremsscheibe ausübt, wodurch die Bremsscheibe gegen die Federkraft des Federelementes in Richtung des Spulengehäuses gepresst und vom Bremsbelag abgehoben wird.

Ferner ist aus der DE8905230U1 eine an eine elektrische Maschine anbaubare Bremse bekannt, welche einen durch einen Elektromagneten betätigbaren Anker aus ferromagnetischem Material aufweist, der axial beweglich an einem mittels eines axialen Nabenansatzes verdreh- und axialfest mit der Welle der elektrischen Maschine verbundenen Leichtmetallträger angeordnet ist. Bei der bekannten Bremse ist mit dem Nabenabsatz eine aus dem gleichen Material wie die Welle der elektrischen Maschine bestehende Hülse drehfest verbunden.

Eine weitere Bremse für eine elektrische Maschine, zum Positionieren von mit einer Rotorwelle verbundenen Antriebskomponenten ist aus der W02008009552A3 bekannt. Hierbei weist der Rotor der elektrischen Maschine eine Rotorwelle, ein Rotorpaket und einen Rotorbremskörper auf, wobei das Rotorpaket und der Rotorbremskörper auf der Rotorwelle axial beabstandet befestigt sind und das Rotorpaket und der Rotorbremskörper unmittelbar drehfest miteinander verbunden sind.

In der DE102006007960A1 ist ein Notsystem für ein Elektrofahrzeugmotor angegeben, bei welchem durch ein Airbagsystem des Elektrofahrzeugs ein Unfallwarnsignal bereitgestellt wird und welches einen pyrotechnischen Anzünder zur Betätigung des Notsystems umfasst. Bei Erfassung eines Unfallereignisses durch ein dem Airbagsystem zugeordnetes Airbagsteuergerät wird ein Crashsignal an ein Bussystem des Elektrofahrzeugs ausgegeben und in Folge der pyrotechnische Anzünder ausgelöst. Dies bewirkt eine plötzliche Reduzierung der an dem Elektrofahrzeugmotor bereitgestellten Betriebsspannung oder ein plötzliches Unterbrechen der Spannungsversorgung des Elektrofahrzeugmotors. Der Rotor kann sich jedoch hierbei für eine gewisse Zeit dennoch weiterdrehen und Spannung induzieren.

Der vorliegenden Erfindung liegt die Aufgabe zugrunde, ein Notbremssystem für elektrische Maschinen in Hybridfahrzeugen und Elektrofahrzeugen anzugeben, durch die der Rotor der elektrischen Maschine in einer sehr kurzen Zeit festgebremst werden kann, um das Erzeugen einer Spannung durch die elektrische Maschine zu verhindern.

Diese Aufgabe wird durch die Merkmale des Patentanspruchs 1 gelöst. Weitere erfindungsgemäße Ausgestaltungen und Vorteile gehen aus den abhängigen Ansprüchen hervor.

Demnach wird ein Notbremssystem für elektrische Maschinen in Hybridfahrzeugen und Elektrofahrzeugen vorgeschlagen, welches eine Sensorik zur Erkennung eines kritischen Fehlers, einen pyrotechnischen Aktuator zur Betätigung einer Notbremse, und eine Notbremse zum Festbremsen des Rotors umfasst. Die Notbremse wird dabei im nicht betätigten Zustand durch die Kraft eines Federelementes vorgespannt und durch einen Haken oder ein Element umfassend eine Sollbruchstelle im nicht betätigten Zustand gehalten, wobei durch die Zündung des pyrotechnischen Aktuators der Haken bewegt bzw. das Element umfassend die Sollbruchstelle zerstört wird, so dass sich die Notbremse durch die Kraft des Federelementes und den Druck des Treibsatzes in Richtung auf den Rotor der elektrischen Maschine bewegt wird.

Vorzugsweise ist die Notbremse als selbstverstärkende Bremse, beispielsweise als in Drehrichtung des Verbrennungsmotors selbstverstärkende Keilbremse ausgeführt. Die Ausführung der Notbremse als selbstverstärkende Bremse ist insbesondere angesichts des nur kurzzeitig wirkenden pyrotechnischen Aktuators von besonderer Relevanz. Alternativ zu der Ausführung als Keilbremse kann die Bremse als Band- oder Scheibenbremse ausgeführt sein.

Im Rahmen einer vorteilhaften Ausführungsform der Erfindung kann als Sensorik eine im Fahrzeug bereits vorhandene Crash-Sensorik verwendet werden; beispielsweise können die Signale der Beschleunigungsaufnehmer der Airbag-Auslösung verwendet werden. Des Weiteren kann auch die Sensorik der Leistungselektronik der elektrischen Maschine verwendet werden, welche kritische Fehler im Stromleitungsnetz des Fahrzeugs detektiert.

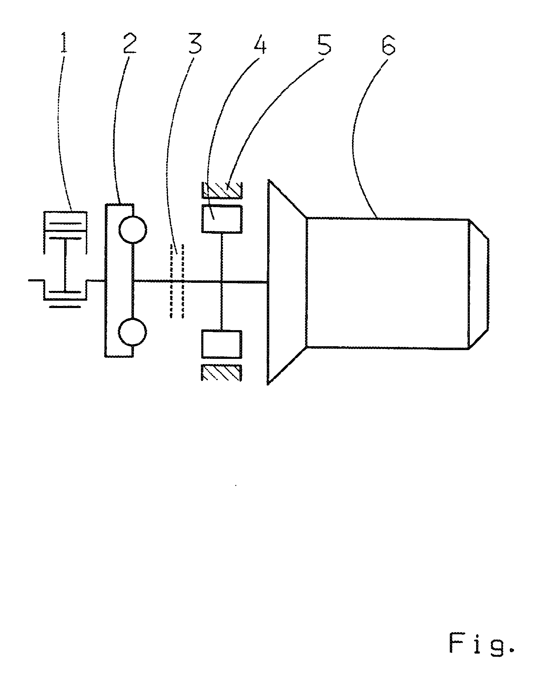

Die Erfindung wird im Folgenden anhand der beigefügten Figur, welche eine schematische Darstellung des Antriebsstrangs eines parallelen Hybridfahrzeugs darstellt, beispielhaft näher erläutert. Obwohl die Erfindung anhand eines parallelen Hybridfahrzeugs erläutert wird, ist deren Gegenstand in jedem Hybridkonzept, d.h. auch in einem seriellen oder leistungsverzweigten Hybridfahrzeug sowie in einem Achshybrid oder Elektrofahrzeug einsetzbar.

In der beigefügten Figur ist mit dem Bezugszeichen 1 ein Verbrennungsmotor, mit 2 ein Zweimassenschwungrad, mit 4 eine elektrische Maschine und mit 6 ein Getriebe bezeichnet; anstelle des Zweimassenschwungrades 2 kann ein hydrodynamischer Wandler vorgesehen sein.

Ferner ist mit dem Bezugszeichen 3 eine optionale zwischen dem Verbrennungsmotor 1 und der elektrischen Maschine 4 angeordnete Trennkupplung versehen.

Gemäß der Erfindung ist zum Festbremsen des Rotors der elektrischen Maschine 4 in kritischen Situationen ein Notbremssystem vorgesehen, umfassend eine nicht dargestellte Sensorik zur Erkennung eines kritischen Fehlers, einen ebenfalls in der Figur nicht dargestellten pyrotechnischen Aktuator zur Betätigung einer Notbremse, und eine Notbremse 5.

Die Funktionsweise des erfindungsgemäßen Notbremssystems ist wie folgt: Sobald die Sensorik einen kritischen Fehler erkennt, wird ein Signal zum Zünden des pyrotechnischen Aktuators an den pyrotechnischen Aktuator gesendet, wobei nach der Zündung des pyrotechnischen Aktuators die Notbremse betätigt wird. Wie bereits erläutert, kann als Sensorik eine im Fahrzeug bereits vorhandene Crash-Sensorik und/oder die Sensorik der Leistungselektronik der elektrischen Maschine 4 verwendet werden, welche kritische Fehler im Stromleitungsnetz des Fahrzeugs detektiert.

Gemäß der Erfindung ist die Notbremse 5 im nicht betätigten Zustand durch die Kraft eines Federelementes vorgespannt und wird eine geeignete Einrichtung, beispielsweise durch einen Haken oder ein Element umfassend eine Sollbruchstelle im nicht betätigten Zustand gehalten. Durch die Zündung des pyrotechnischen Aktuators wird der Haken bewegt bzw. das Element umfassend die Sollbruchstelle zerstört, so dass sich die Notbremse durch die Kraft der Feder und den Druck des Treibsatzes in Richtung auf den Rotor der elektrischen Maschine 4 bewegt werden kann.

Für den Fall, dass die elektrische Maschine 4 im Antriebsstrang derart angeordnet ist, dass sich deren Rotor immer in Verbrennungsmotordrehrichtung dreht, wie es bei dem Ausführungsbeispiel gemäß der beigefügten Figur der Fall ist, resultiert dies in dem Vorteil, dass eine selbstverstärkende Notbremse, beispielsweise in der Form einer Keilbremse einfach darstellbar ist; hierbei wird die Notbremse durch den Aktuator betätigt und durch den sich drehenden Rotor in ihrer Bremswirkung verstärkt.

Selbstverständlich fällt auch jede konstruktive Ausbildung, insbesondere jede räumliche Anordnung der Bauteile des erfindungsgemäßen Notbremssystems an sich sowie zueinander und soweit technisch sinnvoll, unter den Schutzumfang der vorliegenden Ansprüche, ohne die Funktion des Notbremssystems, wie sie in den Ansprüchen angegeben ist, zu beeinflussen, auch wenn diese Ausbildungen nicht explizit in der Figur oder in der Beschreibung dargestellt sind.

### Bezugszeichen

- 1: Verbrennungsmotor
- 2: Zweimassenschwungrad
- 3: Trennkupplung
- 4: elektrische Maschine
- 5: Notbremse
- 6: Getriebe

## Patentansprüche

1. Notbremssystem für elektrische Maschinen (4) in Hybridfahrzeugen und/oder Elektrofahrzeugen, wobei
- das Notbremssystem eine Sensorik zur Erkennung eines kritischen Fehlers, einen pyrotechnischen Aktuator zur Betätigung einer Notbremse umfasst,
- wenn die Sensorik einen kritischen Fehler erkennt, ein Signal zum Zünden des pyrotechnischen Aktuators an den pyrotechnischen Aktuator gesendet wird, und
- nach der Zündung des pyrotechnischen Aktuators die Notbremse (5) betätigt wird, **dadurch gekennzeichnet, dass**
- das Notbremssystem eine Notbremse (5) zum Festbremsen des Rotors der elektrischen Maschine (4) umfasst, und
- die Notbremse (5) im nicht betätigten Zustand durch die Kraft eines Federelementes vorgespannt und durch einen Haken oder ein Element umfassend eine Sollbruchstelle im nicht betätigten Zustand gehalten wird, wobei durch die Zündung des pyrotechnischen Aktuators der Haken bewegt bzw. das Element umfassend die Sollbruchstelle zerstört wird, so dass sich die Notbremse (5) durch die Kraft des Federelementes und den Druck des Treibsatzes in Richtung auf den Rotor der elektrischen Maschine (4) bewegt wird.

2. Notbremssystem nach Anspruch 1, **dadurch gekennzeichnet, dass** die Notbremse (5) als Keilbremse, Band- oder Scheibenbremse ausgeführt ist.

3. Notbremssystem nach Anspruch 2, **dadurch gekennzeichnet, dass** die Notbremse (5) als selbstverstärkende Bremse ausgeführt ist.

4. Notbremssystem nach Anspruch 3, **dadurch gekennzeichnet, dass** die Notbremse (5) als in Drehrichtung des Verbrennungsmotors selbstverstärkende Keilbremse ausgeführt ist.

5. Notbremssystem nach einem der vorangehenden Ansprüche, **dadurch gekennzeichnet, dass** als Sensorik eine im Fahrzeug bereits vorhandene Crash-Sensorik und/oder die Sensorik der Leistungselektronik der elektrischen Maschine (4) verwendet werden.

## Claims

1. Emergency brake system for electrical machines (4) in hybrid vehicles and/or electric vehicles, with
- the emergency brake system comprising a sensor system for detecting a critical fault, a pyrotechnic actuator for operating an emergency brake,
- a signal for triggering the pyrotechnic actuator being transmitted to the pyrotechnic actuator when the sensor system detects a critical fault, and
- the emergency brake (5) being operated after the pyrotechnic actuator is triggered,
**characterized in that**
- the emergency brake system comprises an emergency brake (5) for locking the rotor of the electrical machine (4), and
- the emergency brake (5), in the unoperated state, is prestressed by the force of a spring element and is held in the unoperated state by a hook or an element comprising a predetermined breaking point, with triggering of the pyrotechnic actuator moving the hook or destroying the element comprising the predetermined breaking point, so that the emergency brake (5) is moved in the direction of the rotor of the electrical machine (4) by virtue of the force of the spring element and the pressure of the propellant.

2. Emergency brake system according to Claim 1, **characterized in that** the emergency brake (5) is designed as a wedge brake, belt brake or disc brake.

3. Emergency brake system according to Claim 2, **characterized in that** the emergency brake (5) is designed as a self-energizing brake.

4. Emergency brake system according to Claim 3, **characterized in that** the emergency brake (5) is designed as a wedge brake which is self-energized in the direction of rotation of the internal combustion engine.

5. Emergency brake system according to one of the preceding claims, **characterized in that** the sensor system used is a crash sensor system which is already present in the vehicle and/or the sensor system of the power electronics of the electrical machine (4).

## Revendications

1. Système de freinage d'urgence pour machines électriques (4) dans des véhicules hybrides et/ou des véhicules électriques, dans lequel
- le système de freinage d'urgence comprend un dispositif de détection pour détecter une erreur critique, un actionneur pyrotechnique pour actionner un frein d'urgence,
- lorsque le dispositif de détection détecte une erreur critique, un signal est envoyé à l'actionneur pyrotechnique pour allumer l'actionneur pyrotechnique et
- le frein d'urgence (5) est actionné après l'allumage de l'actionneur pyrotechnique,
**caractérisé en ce que**
- le système de freinage d'urgence comprend un frein d'urgence (5) pour immobiliser par freinage le rotor de la machine électrique (4) et
- le frein d'urgence (5), lorsqu'il n'est pas actionné, est précontraint par la force d'un élément ressort et est maintenu dans l'état non actionné par un crochet ou un élément comprenant un point de rupture voulu, le crochet étant déplacé ou l'élément comprenant le point de rupture voulu étant détruit par l'allumage de l'actionneur pyrotechnique, de sorte que le frein d'urgence (5) soit déplacé en direction du rotor de la machine électrique (4) par la force de l'élément ressort et la pression de la charge propulsive.

2. Système de freinage d'urgence selon la revendication 1, **caractérisé en ce que** le frein d'urgence (5) est réalisé sous la forme d'un frein à clavette, d'un frein à bande ou d'un frein à disque.

3. Système de freinage d'urgence selon la revendication 2, **caractérisé en ce que** le frein d'urgence (5) est réalisé sous la forme d'un frein à auto-renforcement.

4. Système de freinage d'urgence selon la revendication 3, **caractérisé en ce que** le frein d'urgence (5) est réalisé sous la forme d'un frein à clavette qui s'auto-renforce dans le sens de rotation du moteur à combustion.

5. Système de freinage d'urgence selon l'une des revendications précédentes, **caractérisé en ce que** le dispositif de détection utilisé est un dispositif de détection de collision déjà présent dans le véhicule et/ou le dispositif de détection de l'électronique de puissance de la machine électrique (4).
